# EUROPEAN PATENT SPECIFICATION

(11) **EP 4 607 537 B1**
(45) Date of publication and mention of the grant of the patent: **13.05.2026**
(21) Application number: 24158630.4
(22) Date of filing: 20.02.2024
(51) Int. Cl.: G21C 3/14, G21C 3/334, G21C 19/20

(54) **FUEL ASSEMBLY FASTENING MECHANISM, METHOD FOR OPERATING A FUEL ASSEMBLY FASTENING MECHANISM AND FUEL ASSEMBLY**
BRENNELEMENTBEFESTIGUNGSMECHANISMUS, VERFAHREN ZUM BETREIBEN EINES BRENNELEMENTBEFESTIGUNGSMECHANISMUS UND BRENNELEMENT
MÉCANISME DE FIXATION D'UN ASSEMBLAGE COMBUSTIBLE, PROCÉDÉ DE FONCTIONNEMENT D'UN MÉCANISME DE FIXATION D'UN ASSEMBLAGE COMBUSTIBLE ET ASSEMBLAGE COMBUSTIBLE

(43) Date of publication of application: 27.08.2025
(73) Proprietor: Transmutex SA, 1214 Vernier (CH)
(72) Inventor: STROHMER, Franz Xaver, 1214 Vernier (CH); GROSKA, Judit, 1214 Vernier (CH); BRESSEL, Lukas, 1214 Vernier (CH)
(74) Representative: Prinz & Partner mbB

(56) References cited:
- CN-A- 112 420 224
- CN-B- 109 896 393
- KR-A- 20220 113 213
- US-A- 3 601 261
- US-A- 4 286 287
- US-A- 4 311 557

## Description

The invention relates to a fuel assembly fastening mechanism for use in a nuclear reactor, a method for operating a fuel assembly fastening mechanism and a fuel assembly for a fuel assembly fastening mechanism.

A nuclear reactor comprises a plurality of fuel assemblies arranged within a core of the nuclear reactor. The fuel assemblies need to be fixed within the core to ensure a correct alignment and allow for a precisely controllable handling of the fuel assemblies. Typically, a nuclear reactor comprises a bottom core plate and an upper core plate which can be used for fixation of the fuel assemblies. However, fuel assemblies can only be fixed either at the bottom core plate or the upper core plate to avoid mechanical stress on the fuel assemblies caused by thermal grow or neutron-induced grow.

Common nuclear reactor designs use a coolant which is pumped from the bottom core plate in the direction of the upper core plate. Any fixation solution relying on fixation on the lower core plate and/or on the upper core plate therefore needs to work against forces generated from the coolant flow.

Dependent on the type of coolant used in the nuclear reactor, the fuel assemblies can be buoyant within the coolant, e.g. in molten metal-cooled nuclear reactors like lead-cooled nuclear reactors. Therefore, it is not sufficient to rely on gravity alone as fixation force for fuel assemblies in the bottom core plate in such reactors. One solution is the addition of ballast weights on the fuel assemblies made of a material with a specific weight higher than the specific weight of the coolant. However, fuel assemblies with such ballast weights are difficult to handle and might cause problems on the overall structure of the fuel assemblies during operation or in abnormal operating conditions like earthquakes.

Even if coolants are used in which the fuel assemblies are not buoyant, it is still desirable to provide some kind of additional fixation mechanism for the fuel assembly in the bottom core plate to counteract coolant flow and to ensure that the fuel assembly is properly held in place.

Further, it is desirable that each fuel assembly within the nuclear reactor can be handled individually, i.e. can be placed and removed in and from the core of the nuclear reactor, respectively, without interfering with other fuel assemblies placed in the core. Especially in nuclear reactors which are used for generation of desired radionuclides, e.g. isotopes for medical applications or isotopes generated by transmutation, it is desirable to be able to handle the so-called "breeding" fuel assemblies individually to optimize their time spent within the nuclear reactor, and without interrupting the operation of the nuclear reactor.

CN 106 531 232 B discloses a fuel assembly for integrated refueling to be used in nuclear reactors which are cooled by a lead-based alloy. The fuel assembly comprises a plurality of individual fuel elements which are fixed to each other by an upper support grid. The upper support grid is connected to a fixing rod whose lower end is fixed in a bottom plate of the nuclear reactor. However, it is not possible to operate each of the fuel elements individually because they share the same holding structure.

WO 2022 / 231461 A1 and WO 2023 / 009023 A1 describe fuel assemblies which are stabilized vertically based on friction caused by a spring-loaded mechanism. The friction force counteracts the buoyancy of the fuel assembly in the coolant, thereby holding the fuel assembly in position. The use of spring-loaded elements to ensure fixation of the fuel assembly does not meet safety requirements, as the metal of the spring-loaded elements will experience embrittlement due to the high neutron flux in the core of the nuclear reactor (also called "neutron embrittlement"). Therefore, the force which is necessary to remove the fuel assemblies to overcome the tension force of the spring-loaded element is expected to change during the operation time of the fuel assembly. This will increase the risk of the fuel assembly becoming stuck in the core of the nuclear reactor or that a breakage of the spring-loaded element will occur, at least after several core cycles. A long-term reliable operation of the nuclear reactor can therefore not be assured.

From CN 109 767 850 A, a fuel assembly lower locking device is known comprising a spring-loaded cylinder with a holding pin and a wedge to secure the position of the fuel assembly during operation. The wedge is used to unlock the pin before removing the fuel assembly. For the removal, a dedicated unlocking action is necessary without which removing the fuel assembly is not possible. However, the holding pin experiences mechanical stress during insertion and removal of the fuel assembly, as it will be pressed by the holding spring of the spring-loaded cylinder against an inner side of a bottom core plate, resulting in strong friction forces acting on the holding pin. Further, during removal, the holding force between the holding pin and a lower side of the bottom core plate will be exceeded by a pulling force used for removal of the fuel assembly, which results in additional mechanical stress on the holding pin. Therefore, a considerable risk remains that the holding pin undergoes breakage, resulting in a stuck or at least not properly secured fuel assembly. Further, the holding spring will experience neutron embrittlement such that the force acting on the holding pin during removal will change over time and/or the holding spring can break. Document CN112420224A is a further relevant prior art.

It is an object of the invention to provide a fuel assembly fastening mechanism which provides a reliable fixation of fuel assemblies which can be handled individually in the core of a nuclear reactor, even in scenarios in which a coolant is used in which the fuel assembly is buoyant. Further, another object is to provide a method of operating such a fuel assembly fastening mechanism.

The object of the invention is solved by a fuel assembly fastening mechanism for use in a nuclear reactor comprising a core barrel with a bottom core plate, the bottom core plate having a lattice structure with a plurality of open cells. The fuel assembly fastening mechanism includes a fuel assembly comprising a fuel assembly header and a fuel assembly footer arranged at opposite ends of the fuel assembly along a fuel assembly main axis. The fuel assembly footer has a footer housing and comprises a holding lever having a nose, the holding lever being rotatable between an unlocked position and a locked position. The fuel assembly further comprises a securing wedge arranged within the fuel assembly footer, the securing wedge being movable between an upper position and a lower position. When the securing wedge is in one position chosen from the upper position and the lower position of the securing wedge, the holding lever is in the unlocked position, and when the securing wedge is in the other position chosen from the upper position and the lower position of the securing wedge, the holding lever is in the locked position. The fuel assembly fastening mechanism further includes a nozzle for mounting the fuel assembly in one of the open cells of the bottom core plate, the nozzle comprising a nozzle housing engaging the footer housing along the fuel assembly main axis, the nozzle housing comprising a nozzle window. The nose of the holding lever is received by the nozzle window in the locked position of the holding lever such that a contact surface between the nose of the holding lever and the nozzle window is arranged perpendicular to the fuel assembly main axis.

The invention is based on the idea to realize the fixation of the fuel assembly with a mechanism relying on static pressure or static load on the holding lever and avoiding friction forces on the holding lever. That is, there are preferably no friction forces acting on the holding lever during insertion and removal of the fuel assembly and in the locked position of the holding lever. In this way, a safe and reliable mechanism for holding the fuel assembly within the core barrel of the nuclear reactor can be provided. Further, the lifetime of the holding lever and of the nozzle used for mounting the fuel assembly in the bottom core plate is prolonged.

The fact that only a static load is acting on the holding lever is realized by the relative arrangement of the contact surface between the nose of the holding lever and the nozzle window, specifically by the contact surface being perpendicular to the fuel assembly main axis. During operation of the nuclear reactor, the coolant flows essentially parallel to the fuel assembly main axis from the nozzle towards the fuel assembly header, thereby creating an upward force due to the coolant flow. If the fuel assembly is buoyant in the used coolant, the upward force is further created by the buoyancy of the fuel assembly. The upward forces further provide a good and static contact between the holding lever and the nozzle window at the contact surface.

If the indefinite article "a" or "an" is used, it also includes the plural form "one or more", as long as it is not expressly excluded. E.g., the expression "a holding lever" is to be understood as "one or more holding levers" if nothing to the contrary is stated.

The nuclear reactor especially is a nuclear reactor using a molten metal coolant like a lead-based coolant or a sodium-based coolant. E.g., the coolant is lead or a lead-based alloy like a lead-bismuth alloy. Typical fuel assemblies are buoyant in lead-based coolants due to the high specific weight of lead. The fuel assembly fastening mechanism according to the invention still provides for a secure and reliable fixation of the fuel assembly in molten metal coolants, as the fuel assembly will be held by the holding lever within the nozzle window and therefore at the bottom core plate. The upward force based on the buoyancy of the fuel assembly can even contribute to the desired static load acting on the holding lever and the nozzle window in the locked position of the holding lever.

The fuel assembly fastening mechanism further ensures that the fuel assembly can be operated individually. Thus, insertion and removal of any given fuel assembly can be realized independent from any other fuel assemblies used in the nuclear reactor. This allows for a highly flexible operation of the nuclear reactor.

According to the invention, the position of the holding lever is associated to the position of the securing wedge. That is, a change between the unlocked position to the locked position of the holding lever is associated to a movement of the securing wedge from the upper position of the securing wedge to the lower position of the securing wedge or vice versa.

In one variant, the holding lever rotates from the unlocked position to the locked position when the securing wedge is moved from the upper position to the lower position, and the holding lever rotates from the locked position to the unlocked position when the securing wedge is moved from the lower position to the upper position. In this way, the overall movement of the fuel assembly during insertion and removal into the core barrel corresponds to the direction the securing wedge is moved.

In another variant, the holding lever rotates from the unlocked position to the locked position when the securing wedge is moved from the lower position to the upper position, and the holding lever rotates from the locked position to the unlocked position when the securing wedge is moved from the upper position to the lower position.

The holding lever can comprise an opening in which a rotation pin is inserted, the rotating pin defining a rotation axis of the holding lever. By realizing the rotation of the holding lever, i.e. the movement of the holding lever between the unlocked position and the locked position and vice versa, there is no need for introducing any components in the fuel assembly fastening mechanism for realizing the movement of the holding lever whose movement would rely on spring-loaded mechanisms. This ensures that no components are used for insertion and removal of the fuel assembly whose behavior is prone to changing due to neutron embrittlement. Further, rotation around the rotating pin can be realized without friction forces or at least with only minimum amounts of friction force.

The opening in which the rotation pin is inserted can be a bore.

For further reducing the amount of forces acting on the rotation pin during insertion and removal of the fuel assembly, the bore preferably is an oval bore. The oval shape of the bore allows a relative movement of the rotation pin within the bore, especially parallel to the fuel assembly main axis, such that excessive forces on the rotation pin can be avoided.

The holding lever can comprise several holding lever sections, wherein at least two of the holding lever sections are connected by a connection portion in which the opening holding the rotation pin is formed.

The footer housing can have a footer window associated to the holding lever, the footer window being aligned with the nozzle window, wherein the nose of the holding lever is received both by the nozzle window and by the footer window in the locked position of the holding lever. That is, the nose of the holding lever does not need to be secured in the locked state of the holding lever by the nozzle window alone, but can be in contact with the footer window, too. Further, the footer window provides a means to ensure the correct alignment of the fuel assembly relative to the nozzle during insertion of the fuel assembly, as the nose of the holding lever needs to be able to enter both the nozzle window and the footer window in the locked state without experiencing any frictional forces.

To even further reduce the risk of friction forces acting on the fuel assembly fastening mechanism during insertion and removal of the fuel assembly, the nose of the holding lever can have a first sloping surface and the footer window can have a second sloping surface being in contact with the first sloping surface in the locked position of the holding lever. During the rotational movement the holding lever undergoes when being switched from the unlocked position into the locked position or vice versa, the first sloping surface and the second sloping surface ensure that the nose of the holding lever can slide into the nozzle window and into the footer window without risking a collision of the nose with any parts of the fuel assembly footer and the nozzle. Thus, friction forces acting on the nose of the holding lever as a result of a collision are avoided. The slope of the first sloping surface and of the second sloping surface especially are corresponding to each other, preferably being equal.

To provide an especially secure fixation of the fuel assembly in the bottom core plate and to provide for an even distribution of the static load acting on the fuel assembly when being mounted to the bottom core plate, the fuel assembly footer can comprise more than one holding lever, and the nozzle housing can comprise more than one nozzle window, wherein each of the holding levers is associated to one of the nozzle windows. Termed differently, multiple holding levers can be used for fixation of the fuel assembly. This provides a redundant fixation mechanism for the fuel assembly such that the fuel assembly will be reliably secured in its position even if one of the holding levers fails.

All of the holding levers preferably switch between their unlocked position and their locked position in a synchronized manner when the securing wedge is moved from the upper position to the lower position and vice versa, or from the lower position to the upper position and vice versa.

In this variant, if footer windows are present in the footer housing, preferably, more than one footer windows are present, one for each holding lever and nozzle window. That is, each of the more than one footer windows is preferably associated to one of the holding levers.

For controlling the position of the securing wedge, the fuel assembly header can comprise an operation handle and the fuel assembly comprises a connection rod connecting the operation handle with the securing wedge. Accordingly, the movement of the operation handle is transferred to the securing wedge by the connection rod.

To realize a precise control of the position of the securing wedge, the operation handle can engage a groove of the fuel assembly header, the groove extending from an upper rest section to a lower rest section, wherein the operation handle is movable from the upper rest section to the lower rest section. Accordingly, when the operation handle is located in the upper rest section, the securing wedge will be in its upper position, and when the operation handle is located in the lower rest section, the securing wedge will be in its lower position. This allows to check the current position of the securing wedge, and therefore also the current position of the holding lever(s), based on the current position of the operation handle within the groove. Further, the groove provides a guided path for the movement of the operation handle, thereby further improving the precision with which the fuel assembly fastening mechanism can be operated.

The securing wedge can comprise a protruding portion contacting the holding lever. That is, the interaction between the securing wedge and the holding lever can be realized by means of the protruding portion.

If the fuel assembly comprises several holding levers, the securing wedge preferably comprises one protruding portion per holding lever, wherein each of the protruding portions is associated to one of the holding levers.

The protruding portion(s) can have a first section and a second section connected by a protrusion, the first section and the second section being at an angle relative to each other. The angle formed between the first section and the second section of the protruding portion especially corresponds to the holding lever sections with which the securing wedge interacts.

The nozzle housing preferably engages a footer groove in the footer housing such that an intimate contact between the fuel assembly and the nozzle is realized and movements which are not parallel to the fuel assembly main axis can be blocked by interaction of the nozzle housing and the footer housing.

The size and shape of the nozzle housing and the footer groove of the footer housing are adapted to each other, accordingly. E.g., the nozzle housing and the footer groove can be of a cylindrical shape.

To ensure a correct alignment between the fuel assembly and the nozzle when inserting the fuel assembly, the fuel assembly footer can comprise an alignment pin which is received by an alignment opening of the nozzle. Thus, the alignment pin of the fuel assembly footer will engage the alignment opening of the nozzle, thereby ensuring a correct rotational alignment of the fuel assembly and the nozzle.

The alignment opening can be arranged within a flange of the nozzle for resting on the bottom core plate.

The alignment opening can be an extender bore such that coolant being present in the alignment opening during insertion of the fuel assembly can be released from the alignment opening when the alignment pin enters the associated alignment opening.

Preferably, the fuel assembly footer comprises more than one alignment pin and the nozzle comprises one alignment opening per pin, each one of which is associated to one of the alignment pins.

The alignment pins can be arranged symmetrically or asymmetrically on the fuel assembly footer. A symmetrical arrangement provides for an even distribution of forces acting between the alignment pins and the alignment openings. An asymmetrical arrangement provides an easy way to ensure that the fuel assembly can only be mounted in a preferred rotational orientation relative to the nozzle. This is especially advantageous, if some further part of the footer assembly, e.g. the operation handle, or of further components of the nuclear reactor, e.g. a fuel assembly handling device, can be simplified when a specific rotational orientation of the fuel assembly is ensured. In this case the alignment pins can be arranged according to the so-called "Poka-Yoke" principle, providing a fail-safe arrangement of the alignment pins.

To allow for an easy and reliable connection between the nozzle and the bottom core plate of the nuclear reactor the fuel assembly fastening mechanism is intended for, the nozzle can have a thread for connecting the nozzle with the open cell of the bottom core plate. That is, the nozzle can be screwed into the bottom core plate. At the same time, in case of malfunctions of the fuel assembly fastening mechanism in which the fuel assembly cannot be removed from the nozzle anymore, the nozzle can be removed together with the fuel assembly by unscrewing the nozzle from the bottom core plate by rotating the whole of the fuel assembly and the nozzle connected thereto.

To control the flow of coolant through the nozzle, the nozzle can have a meshed orifice at a lower end of the nozzle. The mesh size of the meshed orifice can be used for determining the flow rate of the coolant through the nozzle and therefore through the fuel assembly. The mesh size can therefore be adapted to the type of fuel used in the fuel assembly. The orifice can have a net-like structure.

In addition to the upper position and the lower position, the securing wedge can be movable to a safety removal position, wherein the securing wedge is arranged within a debris basket of the nozzle in the safety removal position. The safety removal position is intended for situations in which normal operation of the fuel assembly fastening mechanism is not anymore possible, e.g. because the movement of the securing wedge from the lower position to the upper position is blocked by precipitations formed on the holding levers. In this case, the securing wedge can be moved to the safety position and both the fuel assembly and the nozzle can be removed from the core barrel of the nuclear reactor.

The securing wedge especially is not in contact with the holding lever(s) in the safety removal position. In this way, a further mechanism can be used for bringing the holding lever(s) in a desired position again.

To move the securing wedge into the safety removal position, the operation handle of the fuel assembly can be dismountable from the connection rod connecting the operation handle and the securing wedge. This allows to connect a rod extension bar to the connection rod having a length which is sufficient to press the securing wedge from the lower position further down along the fuel assembly main axis into the safety removal position, i.e. into the debris basket of the nozzle.

The fuel assembly fastening mechanism can further comprise a safety unlocking device comprising an unlocking cylinder being movable from a first position to a second position, wherein the unlocking cylinder is configured to push against the nose of the holding lever in the second position. With the safety unlocking device, it is possible to move the holding lever from the locked position to the unlocked position in case of malfunctions of the fuel assembly fastening mechanism, e.g. due to precipitations formed on the holding levers.

E.g., the safety unlocking device can be used to unlock the holding lever after the securing wedge is moved to the safety removal position such that the nose is removed from the nozzle window and the fuel assembly can be removed from the core barrel of the nuclear reactor.

The movement of the unlocking cylinder can be controlled by a hydraulic system, e.g. a hydraulic system using a high-boiling oil or a molten metal, e.g. lead, as hydraulic medium.

The unlocking cylinder especially is arranged such that it can move through the footer window, and especially both through the footer window and the nozzle window, to reach the nose of the holding lever in the second position.

If the fuel assembly footer comprises more than one holding lever, the safety unlocking device preferably comprises one unlocking cylinder per holding lever such that each holding lever is associated to one of the unlocking cylinders.

The object of the invention is further solved by a method of operating a fuel assembly fastening mechanism as described before, the method comprising the following steps: The nozzle is mounted in one of the open cells of the bottom core plate. Then, the fuel assembly is inserted in the core barrel, while the holding lever is in its unlocked position, by lowering the fuel assembly onto the nozzle such that the nozzle housing engages the footer housing. Afterwards, the securing wedge is moved from its upper position to its lower position, or from its lower position to its upper position, thereby rotating the holding lever to its locked position.

During insertion of the fuel assembly in the core barrel, the fuel assembly is pushed directly onto the nozzle, e.g. by means of a fuel assembly handling device, while the position of the securing wedge, and therefore the position of the holding lever, is changed. Then, the pushing force acting on the fuel assembly is released in a controlled manner and the fuel assembly is secured by the interaction of the nose of the holding lever and the nozzle.

The properties and features described above for the fuel assembly fastening mechanism also apply for the method of operating the fuel assembly fastening mechanism and vice versa and it is referred to the above explanations.

The method according to the present invention allows to mount the fuel assembly essentially free of frictional forces in the core barrel of a nuclear reactor, thereby minimizing wear of the components of the fuel assembly fastening mechanism and ensuring a reliable operation of the nuclear reactor. Further, the method ensures that each fuel assembly can be handled individually, even during operation of the nuclear reactor, i.e. without the need for a downtime of the nuclear reactor, such that an optimal removal/extraction protocol of fuel assemblies can be easily realized for a given nuclear reactor.

When the fuel assembly is to be removed from the core barrel, the mounting procedure is essentially reversed. That is, the securing wedge is moved from its lower position to its upper position, or from its upper position to its lower position, thereby rotating the holding lever to its unlocked position. Then, the fuel assembly is raised from the nozzle upwards along the fuel assembly main axis in a controlled manner, e.g. by the fuel assembly handling device, such that the nozzle housing is removed from the footer housing and the fuel assembly is extracted from the core barrel. The nozzle can remain within the bottom core plate to be available for the next fuel assembly.

The object of the invention is further solved by a fuel assembly for a fuel assembly fastening mechanism as described before, the fuel assembly comprising a fuel assembly header and a fuel assembly footer arranged at opposite ends of the fuel assembly along a fuel assembly main axis. The fuel assembly footer has a footer housing and comprises a holding lever with a nose, the holding lever being rotatable between an unlocked position and a locked position. The fuel assembly further comprises a securing wedge arranged within the fuel assembly footer, the securing wedge being movable between an upper position and a lower position, wherein the holding lever is in the unlocked position when the securing wedge is in one position chosen from the upper position and the lower position of the securing wedge, and the holding lever is in the locked position when the securing wedge is in the other position chosen from the upper position and the lower position.

The properties and features described above for the fuel assembly fastening mechanism and for the method of operating the fuel assembly fastening mechanism also apply for the fuel assembly and vice versa and it is referred to the above explanations.

Further advantages and properties of the invention will become more apparent from the following description of exemplary embodiments of the invention, which are not to be understood as limiting, and from the accompanying drawings. In the drawings:
- Fig. 1 shows a sectional view of a nuclear reactor core barrel with a fuel assembly fastening mechanism according to the invention,
- Fig. 2 shows a top of the nuclear reactor core barrel of Fig.1,
- Fig. 3 shows a sectional view of a nozzle of the fuel assembly fastening mechanism of Fig. 1 as inserted in a bottom core plate of the nuclear reactor core barrel of Fig. 1,
- Fig. 4 shows a perspective view of the nozzle of Fig. 3,
- Fig. 5 shows a further sectional view of the nozzle of Fig. 3,
- Fig. 6 shows a partially transparent perspective view of the nozzle of Fig. 3,
- Fig. 7 shows an enlarged view of a detail A in Fig. 6,
- Fig. 8 shows another enlarged view of detail A of Fig. 6 when an alignment pin of the fuel assembly fastening mechanism is lowered onto the nozzle,
- Fig. 9 shows a side view on the fuel assembly fastening mechanism of Fig. 1 at the height of a fuel assembly footer,
- Fig. 10 shows a sectional view of the fuel assembly footer of Fig. 9,
- Fig. 11 shows a sectional view illustrating the interaction of the nozzle and the fuel assembly footer of Fig. 10,
- Fig. 12 shows a further sectional view of the fuel assembly fastening mechanism of Fig. 1 including a fuel assembly header with an operation handle being in an upper rest section,
- Fig. 13 shows another sectional view of the fuel assembly fastening mechanism of Fig. 1 with the operation handle in being in a lower rest section,
- Fig. 14 shows a perspective sectional view of the fuel assembly fastening mechanism of Fig. 1,
- Fig. 15 shows a perspective view of a securing wedge of the fuel assembly fastening mechanism of Fig. 1,
- Fig. 16 shows a partial sectional view of the securing wedge of Fig. 15 within the fuel assembly footer,
- Figs. 17a) to c) show different views on a rotation pin of the fuel assembly footer of Fig. 10,
- Fig. 18 shows a partial sectional view of the fuel assembly fastening mechanism of Fig. 1 during insertion of the fuel assembly in the core of the nuclear reactor,
- Fig. 19 shows another partial sectional view of the fuel assembly fastening mechanism of Fig. 1 after insertion of the fuel assembly in the core of the nuclear reactor,
- Fig. 20 shows a front view of selected parts of the fuel assembly fastening mechanism of Fig. 1 with the securing wedge being in a safety removal position,
- Fig. 21 shows a partial sectional view of the fuel assembly footer of Fig. 10 with the securing wedge being in a safety removal position together with the nozzle of Fig. 3 inserted in the bottom core plate of the nuclear reactor core barrel,
- Fig. 22 shows a partial sectional view of the fuel assembly fastening mechanism of Fig. 1 showing details of a safety unlocking device,
- Fig. 23 shows a perspective view on the safety unlocking device of Fig. 22,
- Fig. 24 shows another partial sectional view of the fuel assembly footer of Fig. 10 together with the nozzle of Fig. 3 inserted in the bottom core plate of the nuclear reactor core barrel during operation of the safety unlocking device of Fig. 22, and
- Fig. 25 shows a block diagram of a method according to the invention for operating the fuel assembly fastening mechanism of Fig. 1.

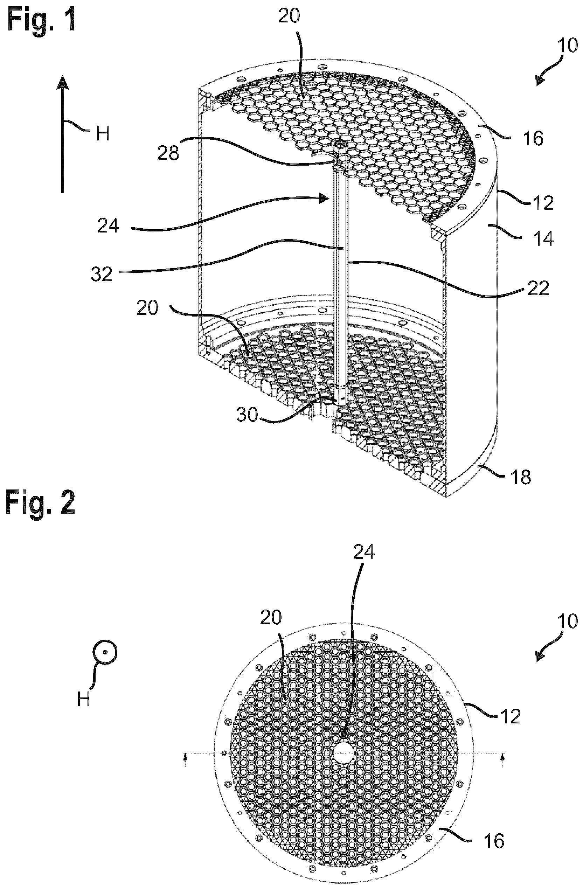

Figs. 1 and 2 show a sectional view and a top view, respectively, of a nuclear reactor 10, more precisely of a core barrel 12 of the nuclear reactor 10.

The type of nuclear reactor 10 is not restricted to a specific type of nuclear reactor. E.g., the nuclear reactor can be a water-cooled reactor like a pressurized water reactor (PWR), a boiling water reactor (BWR) or a supercritical water reactor (SCWR), a heavy water reactor, a molten metal cooled reactor like a lead-cooled fast reactor or a sodium-cooled fast reactor, or a molten-salt reactor.

The nuclear reactor 10 preferably is a nuclear reactor based on subcritical transmutation accelerated regenerative technology. The chain reaction within the core barrel 12 therefore can be controlled based on a neutron flux directed to the core barrel 12 from a (not shown) external particle accelerator. However, generally, the nuclear reactor 10 can be any kind of nuclear reactor 10 using a general design concept like the one shown in the embodiment.

The core barrel 12 comprises a core housing 14 with an upper core plate 16 and a bottom core plate 18 arranged at opposite ends of the core housing 14 along a height direction H. In the shown embodiment, the core barrel 12 has a generally cylindrical shape extending from a core center 24 radially outwards.

Both the upper core plate 16 and the bottom core plate 18 have a lattice structure formed from a plurality of open cells 20. In the shown embodiment, the open cells 20 of the upper core plate 16 have a generally hexagonal cross section while the open cells 20 of the lower core plate 18 have a circular cross section.

Each of the open cells 20 represents a slot in which a fuel assembly 22 can be placed into the core barrel 12, e.g. by a (not shown) fuel assembly handling device. For the sake of clarity, Fig. 1 only shows a single fuel assembly 22 placed in the core barrel 12.

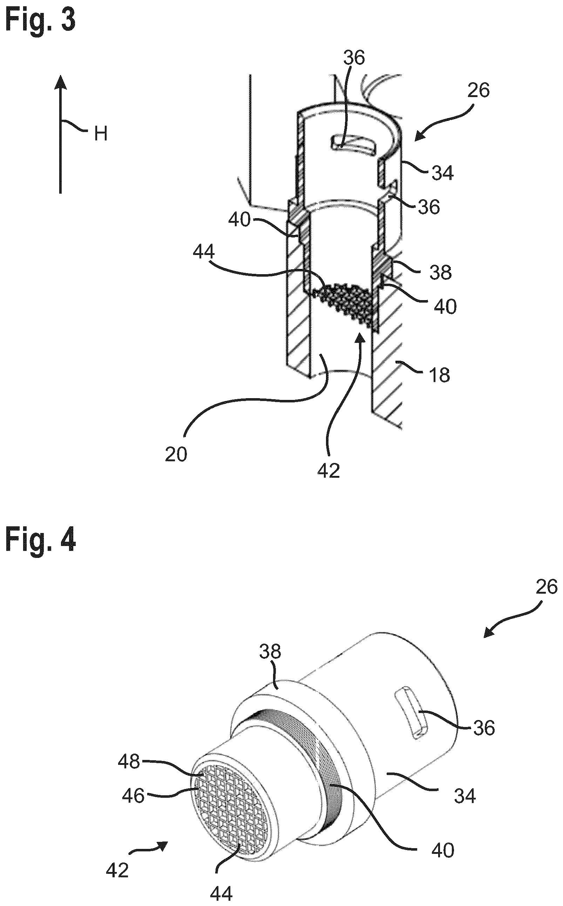

The fuel assembly 22 is part of a fuel assembly fastening mechanism 24 including the fuel assembly 22 and a nozzle 26 which is screwed into one of the open cells 20 of the bottom core plate 18 (see Fig. 3).

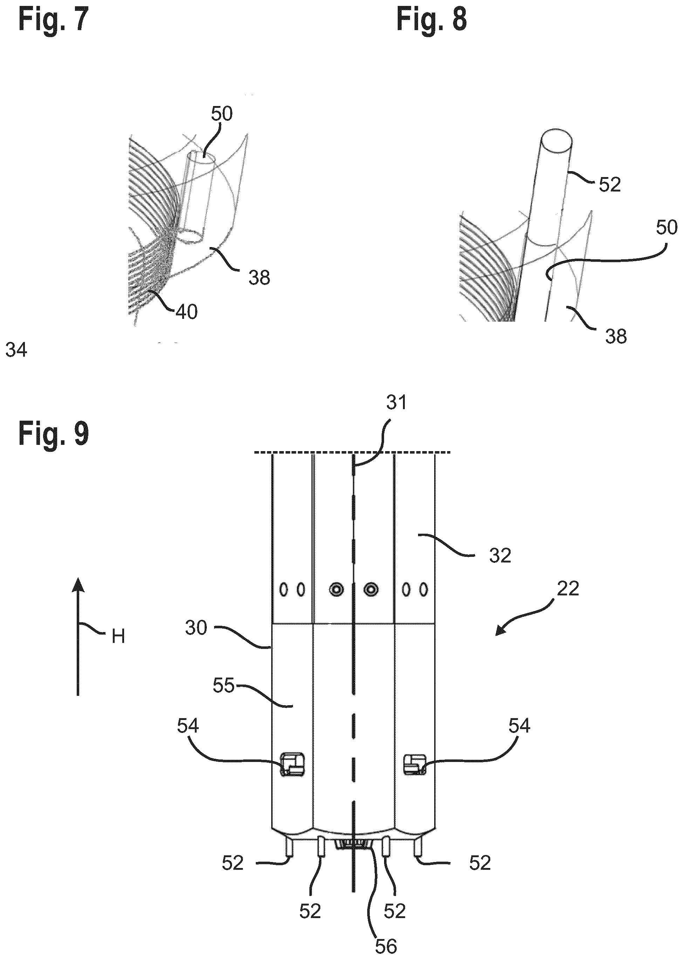

The fuel assembly 22 comprises a fuel assembly header 28 associated to the upper core plate 16 and a fuel assembly footer 30 associated to the bottom core plate 18. That is, the fuel assembly header 28 and the fuel assembly footer 30 are arranged at opposite ends of a fuel assembly main axis 31 being parallel to the height direction H of the core barrel 12 (see Fig. 9).

The fuel assembly header 28 and the fuel assembly footer 30 are connected by a fuel assembly main body 32 which comprises the fuel of the fuel assembly 22.

The fuel assembly header 28, the fuel assembly main body 32 and the fuel assembly footer 30 have a generally hexagonal shape corresponding to the hexagonal cross section of the open cells 20. Of course, different cross sections of the open cells 20 are also possible, as long as the shapes of the fuel assembly header 28, the fuel assembly footer 30 and the fuel assembly main body 32 are adapted correspondingly.

The core barrel 12 is cooled by a coolant flowing from the bottom core plate 18 towards the upper core plate 16. In the shown embodiment, the coolant is a lead-based coolant, e.g. lead or a lead-based alloy like a lead-bismuth alloy. The coolant thus has a specific weight which is higher than the specific weight of the fuel assembly 22 such that the fuel assembly 22 is buoyant within the coolant.

Therefore, the fuel assembly 22 as part of the fuel assembly fastening mechanism 24 is fixed to the bottom core plate 18 by means of the nozzle 26 to avoid that the fuel assembly 22 is moved out of the associated open cell 20. Fixation of the fuel assembly 22 is also necessary to avoid that the fuel assembly 22 is moved out of the associated open cell 20 due to the coolant flow in the direction toward the upper core plate 18.

Of course, a different type of coolant can be used, too, in which the fuel assembly 22 is not buoyant. Even in such cases the fuel assembly 22 can be fixed to the bottom core plate 18 by means of the nozzle 26 to ensure a reliable and secure fixation of the fuel assembly 22 within the core barrel 12 of the nuclear reactor 10 to avoid that the fuel assembly 22 is moved out of the associated open cell 20 due to the coolant flow.

Fig. 3 shows a sectional view of the nozzle 26 in its position as mounted in the bottom core plate 18.

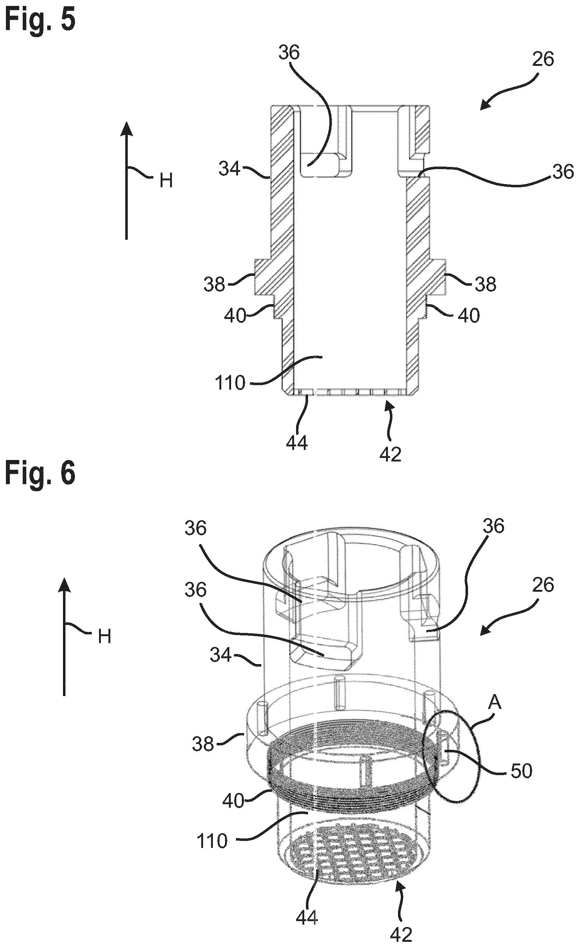

The nozzle 26 has a cylindrical nozzle housing 34 with a plurality of nozzle windows 36 which extend from within the nozzle housing 34 to the outside of the nozzle housing 34. Termed differently, the nozzle windows 36 extend through the nozzle housing 34, forming openings in the nozzle housing 34 (see also Fig. 5).

The nozzle 26 further comprises a flange 38 which rests on an upper surface of the bottom core plate 18 in the mounting position of the nozzle 26.

The nozzle 26 is connected to the bottom core plate 18 by means of a thread 40, i.e. the nozzle 26 is screwed into the bottom core plate 18 which comprises a matching thread for the thread 40 of the nozzle 26 within the opening 20. The threaded connection between the nozzle 26 and the bottom core plate 18 ensures a secure connection between these components and at the same time provides an easy way for exchanging the nozzle 26 if need be, e.g. at the end of a pre-determined life-time of the nozzle 26.

The circular cross section of the nozzle 26 and of the open cells 20 of the bottom core plate 18 allows to screw to nozzle 26 into the associated open cell 20 easily.

At a lower end 42 of the nozzle 26, the nozzle 26 comprises a meshed orifice 44 formed by a net-like structure of struts 46 and nozzle openings 48 (see also Fig. 4). The meshed orifice 44 allows the coolant to flow through the open cell 20 and towards the fuel assembly 22 even when the nozzle 26 is installed within the open cell 20.

By choosing the mesh size of the meshed orifice 44, the flow of coolant through the nozzle 26 can be controlled. Of course, throughout the open cells 20 of the bottom core plate 18, nozzles 26 having the same or different mesh sizes can be used. E.g., nozzles 26 placed in open cells 20 at the radially outer positions of the bottom core plate 18 can have a smaller mesh size than nozzles 26 in open cells 20 close to the center of the bottom core plate 18.

The mesh size of the meshed orifice 44 can also be adapted to the type of fuel used in the fuel assembly 22 associated to a given nozzle 26. E.g., a fuel assembly 22 used for generation of medical isotopes may need less cooling than a fuel assembly 22 used for transmutation of thorium and the mesh size can be adapted to provide the necessary coolant flow to achieve a desired cooling behavior.

Fig. 6 shows a partially transparent further perspective view of the nozzle 26 in which it is easier to perceive that, in the shown embodiment, the nozzle 26 has a total of three nozzle windows 36 which are arranged symmetrically along the nozzle housing 34. Of course, the number of nozzle windows 36 can be lower or higher than the one shown in the exemplary embodiment, as long as at least one nozzle window 36 is present.

Fig. 6 further illustrates that the flange 38 comprises several alignment openings 50 which extend through the flange 38 parallel to the fuel assembly main axis 31. The alignment openings 50 are arranged radially symmetrically within the flange 38 and extend from an upper side of the flange 38 to a lower side of the flange 38 such that the alignment openings 50 essentially form a passageway through the flange 38. In principle, the alignment openings 50 can also be arranged in a non-symmetrical manner within the flange 38.

Figs. 7 and 8 show the detail A of Fig. 6 in an enlarged depiction, illustrating more clearly that the alignment openings 50 are used to accommodate alignment pins 52 of the fuel assembly 22. Upon entering of the alignment pins 52 into the alignment openings 50, coolant within the alignment openings 50 can be pushed out of the alignment openings 50.

Fig. 9 depicts a side view on the lower end of the fuel assembly 22 in which the alignment pins 52 arranged at a lower end of the fuel assembly footer 30 are shown.

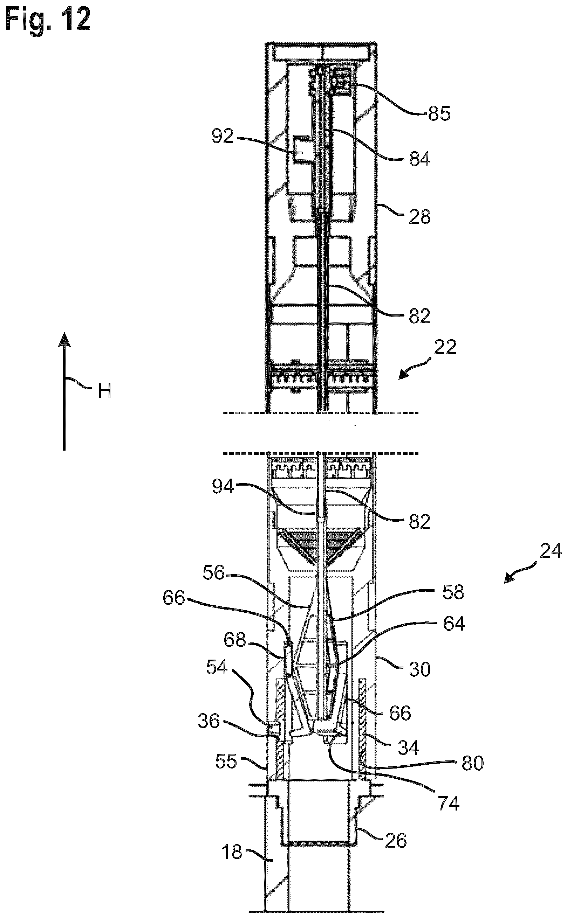

The fuel assembly footer 30 comprises several footer windows 54 distributed along a footer housing 55 of the fuel assembly footer 30. The number of footer windows 54 corresponds to the number of nozzle windows 36 and, in the mounting position of the fuel assembly 22, the footer windows 54 coincide with the nozzle windows 36, forming a passageway from the inside of the fuel assembly footer 30 outwards (see Fig. 12).

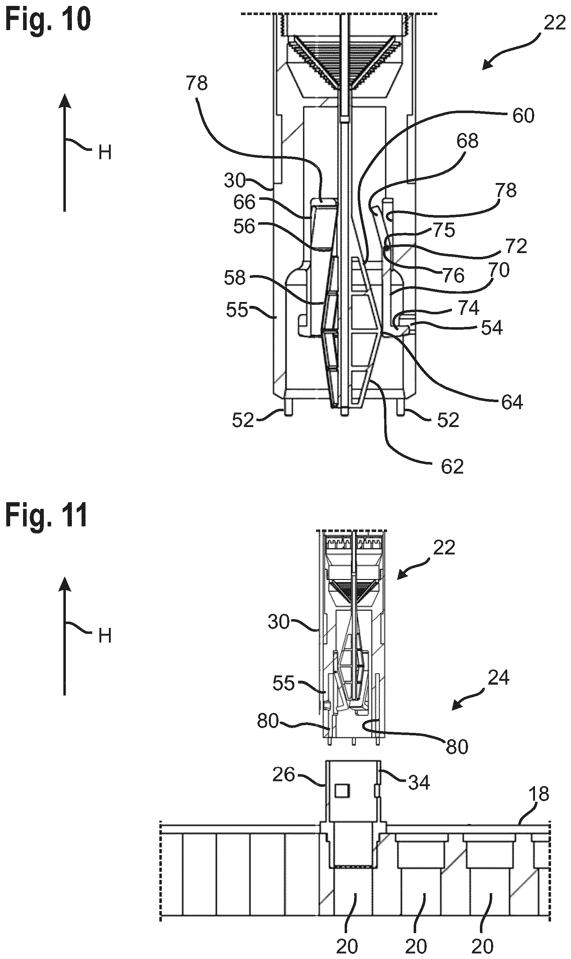

Fig. 10 provides a sectional view of the fuel assembly footer 30.

Within the fuel assembly 22, a securing wedge 56 is arranged. The securing wedge 56 comprises several protruding portions 58 formed from a first section 60 and a second section 62 connected by a protrusion 64. The first section 60 and the second section 62 are at an angle to each other, essentially forming sloped surfaces relative to the fuel assembly main axis 31.

The protrusions 64 of the securing wedge 56 are of skeleton construction such that the coolant can flow more evenly throughout the inner part of the fuel assembly footer 30 upwards towards the fuel assembly main body 32. Further, the weight of the securing wedge 56 is lowered in this way, minimizing the forces necessary for moving the securing wedge 56 within the fuel assembly footer 30.

Further, within the fuel assembly footer 30, a plurality of holding levers 66 are present. Each holding lever 66 comprises a first lever section 68, a second lever section 70 connected to the first lever section 68 by a connection portion 72, and a nose 74 connected to the end of the second lever section 68 opposite to the end of the second lever section 70 associated to the connection portion 72.

The connection portion 72 comprises an opening 75 in which a rotation pin 76 is inserted such to form a rotation center of the respective holding lever 66. That is, the holding lever 66 is rotatable around the rotation pin 76 between an unlocked position and a locked position, as will be described in more detail later.

The first lever section 68 is at an angle relative to the second lever section 70. Further, the nose 74 essentially projects from the second lever section 70 in a plane essentially perpendicular to the second lever section 70. E.g., the angle formed between the second lever section 70 and the nose 74 can be in the range of from 85 to 90°.

The first lever section 68 further is encompassed by an inner footer groove 78 which restricts the rotation of the first lever section 68 toward the outside of the fuel assembly footer 30.

The number of holding levers 66 within the fuel assembly footer 30 is adapted to the number of protruding portions 58 of the securing wedge 56 such that each protruding portion 58 interacts with one of the holding levers 66, as will be described in more detail later.

Generally, only a single holding lever 66 might be present within the fuel assembly footer 30 for securing the fuel assembly 22 to the nozzle 26. However, using several holding levers 66 provide for a redundancy such that the fuel assembly 22 can be reliably secured to the nozzle 26 even in case one of the holding levers 66 fails.

Fig. 11 shows a sectional view of the fuel assembly footer 30, the nozzle 26 and the bottom core plate 18. From this view, it becomes apparent that the fuel assembly footer 30 further comprises an annular footer groove 80 adapted to the size and shape of the part of the nozzle housing 34 extending from the flange 38 upwards. Thus, when the fuel assembly 22 is lowered onto the associated nozzle 26, the nozzle housing 34 engages the annular footer groove 80, thereby realizing a fit between the fuel assembly 22 and the nozzle 26 and securing the fuel assembly against movements perpendicular to the fuel assembly main axis, i.e. along a horizontal plane defined by the lower core plate 18 of the core barrel 12.

Fig. 12 shows another sectional view of the fuel assembly fastening mechanism 24 after the fuel assembly 22 has been lowered onto the nozzle 26 and in which it becomes even more clear how the nozzle housing 34 is received by the annular footer groove 80 of the fuel assembly footer 30.

Further, in Fig. 12, the securing wedge 56 is depicted in an upper position of the securing wedge 56. In the upper position, the protrusions 64 of the protruding portions 58 of the securing wedge 56 are interacting with the first lever sections 68 of the associated holding levers 66, thereby causing the first lever sections 68 to be received within the footer grooves 78. Due to the angled arrangement of the first lever section 68, the second lever section 70 and the nose 74, the nose 74 of the holding lever 66 is arranged outside of both the nozzle window 36 and the footer window 54 inside the fuel assembly footer 30.

The holding levers 66 therefore are in an unlocked position associated to the upper position of the securing wedge 56. In the unlocked position of the holding levers 66, the fuel assembly 22 is not secured against movements along the fuel assembly main axis 31, i.e. against movements along the vertical height direction H of the core barrel 12.

Further, Fig. 12 shows that the securing wedge 56 is connected by a connection rod 82 to an operation handle 84 located within the fuel assembly header 28. Thereby, the position and movement of the securing wedge 56 can be controlled by means of the operation handle 84.

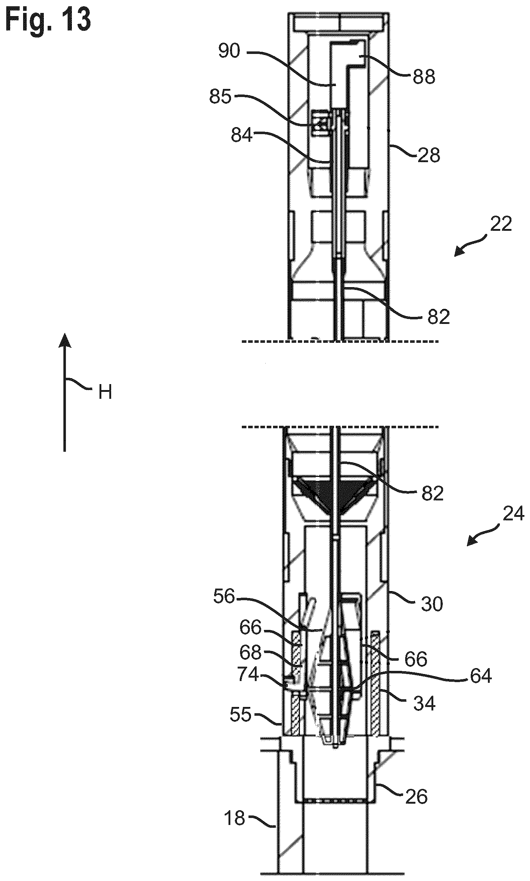

The operation handle 84, more precisely a header part 85 of the operation handle 84, is encompassed by a groove 86 of the fuel assembly header 28 extending from an upper rest section 88 by a groove path 90 to a lower rest section 92 (see also Fig. 13). The size of the upper rest section 88 and of the lower rest section 92 are adapted to the size of the header part 85 such to secure the header part 85 against unwanted movements.

The movement of the operation handle 84 can be controlled by a (not shown) handling device connected to the header part 85, e.g. the fuel assembly handling device.

Fig. 13 shows a cross-sectional view corresponding to Fig. 12, but with the header part 85 of the operation handle 84 moved to the lower rest section 92. Thus, due to the downward movement of the operation handle 84, the securing wedge 56 is also pressed downwards, i.e. in direction of the bottom core plate 18 until a lower position of the securing wedge 56 is reached as depicted in Fig. 13.

Due to the downwards movement of the securing wedge 56, the protrusions 64 come into contact with the second lever sections 70 of the associated holding levers 66, thereby causing the holding levers 66 to rotate around the rotation pins 76. This rotation causes the noses 74 to enter the associated nozzle windows 36 and footer windows 54, thereby locking the fuel assembly 22 and the associated nozzle 26 against vertical movements, i.e. movements along the fuel assembly main axis 31.

As will be noted, the rotational movement the operation handle 84 is not transferred to the securing wedge 56 when the header part 85 is moved from the upper rest section 88 to the lower rest section 92. That is, the securing wedge 56 is rotationally fixed such to ensure that the protruding portions 58 are always in contact with the associated holding levers 66. For this reason, a connection piece 94 is arranged between the securing wedge 56 and the connection rod 82 which transmits vertical movements but blocks rotational movements of the securing wedge 56.

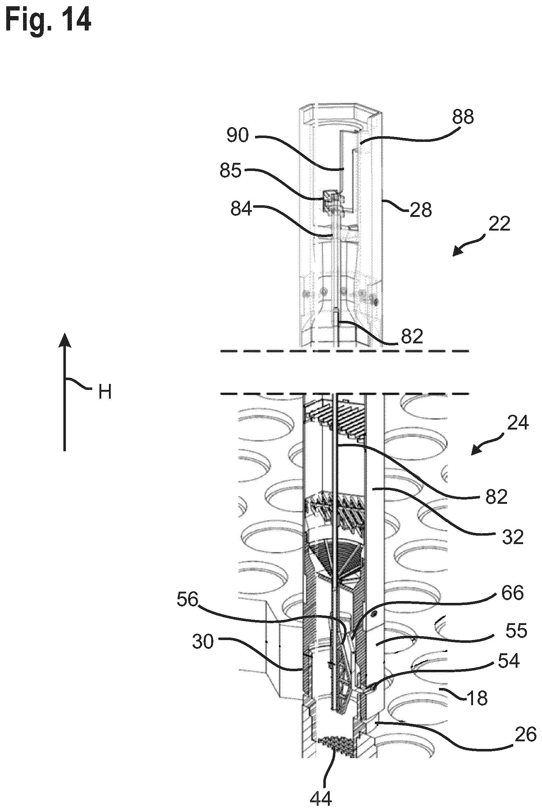

Fig. 14 shows a perspective view of the fuel assembly fastening mechanism 24 with the securing wedge 56 in its lower position in which the position of the nose 74 of the holder lever 66 within the nozzle window 36 and the footer window 54 and the arrangement of the nozzle housing 34 is better visible.

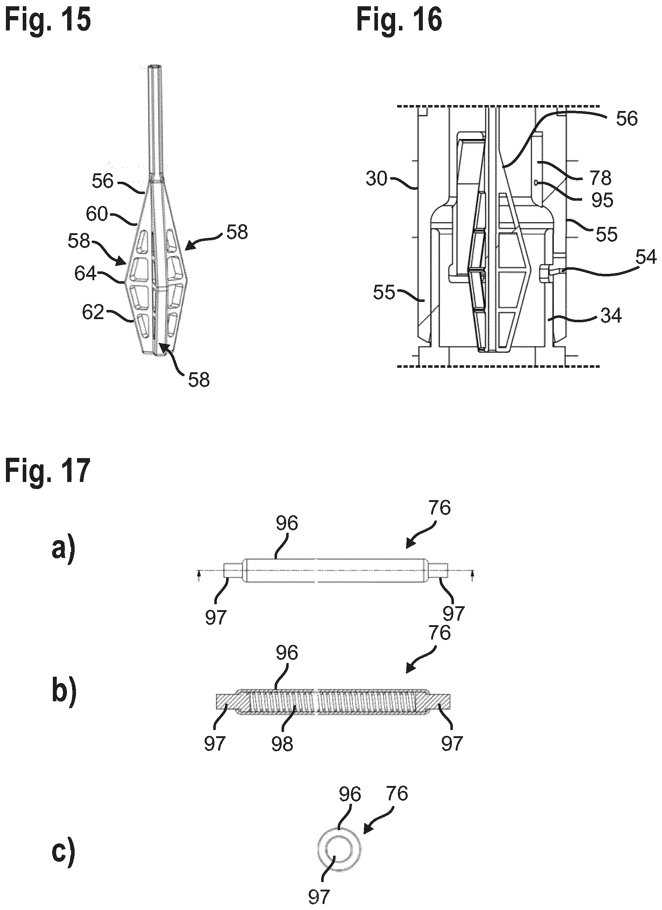

Fig. 15 provides another perspective view of the securing wedge 56 in which the open structure of the protruding portions 58 is illustrated.

Fig. 16 shows another cross sectional view of the fuel assembly footer 30 in which a seat 95 for fixing the rotation pin 76 within the footer groove 78 is depicted. As illustrated in Fig. 16, the seat 95 has an oval shape with an extension parallel to the fuel assembly main axis 31 being slightly larger than the extension perpendicular to the fuel assembly main axis 31. The oval shape allows the rotation pin 76 to adjust its position within the seat 95 in response to vertical movements of the fuel assembly 22, thereby avoiding excessive forces to act on the rotation pin 76 during insertion and removal of the fuel assembly 22 into and from the core barrel 12, respectively. This reduces the risk of mechanical failures of the rotation pin 76 and increases the reliability of the fuel assembly fastening mechanism 24. The opening 75 of the holding levers 66 can also have an oval shape which matches the oval shape of the seat 95.

Figs. 17a) to c) provide more details on the rotation pin 76. The rotation pin 76 is of generally cylindrical shape and comprises a pin housing 96, two locking protrusions 97 arranged at axially opposite ends of the pin housing 96 and a spring 98 arranged inside the pin housing 96. Thus, the rotation pin 76 is an axial spring bar.

During construction of the fuel assembly 22, more precisely of the fuel assembly footer 30, the rotation pin 76 is inserted in the opening 75 of the holding lever 66. Then, the locking protrusions 97 are pressed axially inward against the force of the spring 98 to mount the holding lever 66 in the respective footer groove 78, more precisely in the seats 95 at opposing sides of the footer groove 78.

The holding lever 66 thus is held within the footer groove 78 of the fuel assembly footer 30. Within the fuel assembly 22, the spring 98 of the rotation pin 76 is not contributing to the rotational movement of the holding lever 66. Termed differently, the spring 98 is only used for mounting the holding lever 66 in the first place. Therefore, even in cases in which the spring 98 experiences neutron embrittlement over the lifetime of the fuel assembly 22, there is no impact on the function of the holding lever 66, ensuring high reliability of the fuel assembly fastening mechanism 24.

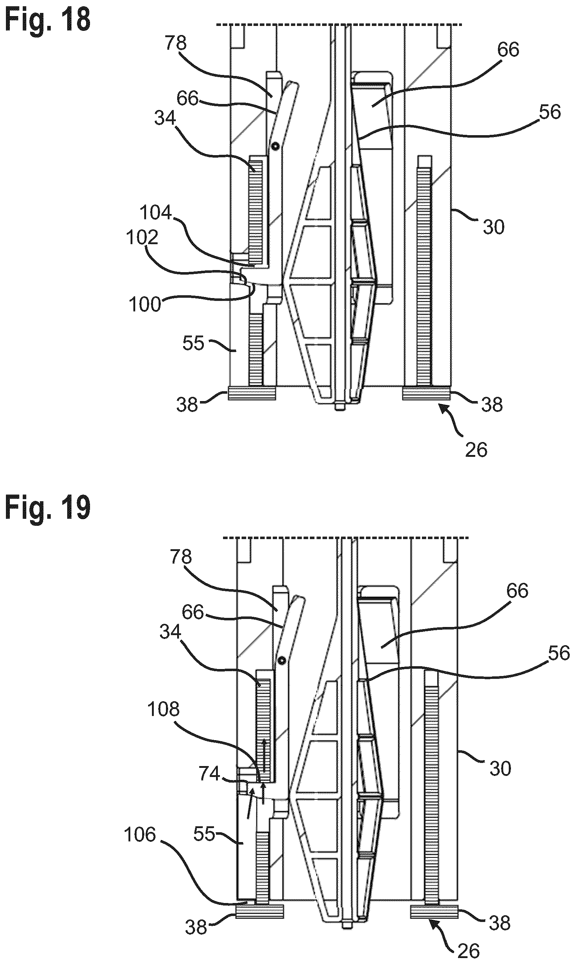

In the following, a method of operating the fuel assembly fastening mechanism 24 as described before will be described in combination with the cross sectional views provided in Figs. 18 and 19.

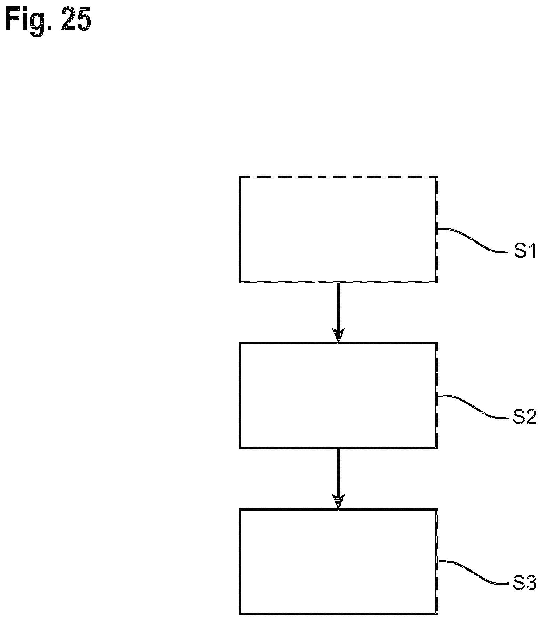

First, the nozzle 26 is mounted in one of the open cells 20 of the bottom core plate 18 of the core barrel 12 of the nuclear reactor 10 (see Fig. 3 and step S1 in Fig. 25).

Then, the fuel assembly 22 is inserted in the core barrel 12 of the nuclear reactor (see step S2 in Fig. 25). The fuel assembly 22 can be moved and inserted in the core barrel 12 by the (not shown) handling device connected to header part 85, e.g. a fuel assembly handling device. That is, the fuel assembly 12 is pushed by the fuel assembly handling device onto the nozzle 26 along the fuel assembly main axis 31.

During insertion of the fuel assembly 22, the securing wedge 56 is in its upper position and thus the holding levers 66 are in their unlocked state such that the fuel assembly 22 can be moved parallel to the height axis of the core barrel 12 without restriction.

The fuel assembly 22 is lowered until the fuel assembly footer 30 rests on the flange 38 of the nozzle 26.

It is also possible that the force with which the fuel assembly 22 is pushed onto the nozzle 26 is measured by a pressure sensor associated to the fuel assembly handling device. Based on the measurement data obtained by the pressure sensor, it is possible to check that on the one hand sufficient force is applied to ensure the correct vertical alignment of the fuel assembly 22 relative to the nozzle 26 and to avoid on the other hand that the fuel assembly 22 is pressed against the nozzle 26 with excessive force, thereby minimizing the risk of damaging the fuel assembly 22 and/or the nozzle 26.

Further, as the rotation pins 76 are arranged within seats 95 and openings 75 having an overall oval shape, the rotation pins 76 can move up and down within the seat 95 and/or the openings 75 such that, when the fuel assembly 22 is pushed against the nozzle 26, no forces act on the rotation pins 76. This minimizes wear on the rotation pins 76 and thereby increases the reliability of the fuel assembly fastening mechanism 24.

The correct relative rotational arrangement between the fuel assembly 22 and the nozzle 26 is ensured by the interaction of the alignment pins 52 of the fuel assembly 22 and the associated alignment openings 50 of the nozzle 26 such that each nozzle window 36 coincides with one of the footer windows 54 (see Fig. 12).

The securing wedge 56 is then moved from its upper position to its lower position, causing the holding levers 66 to rotate, as shown in Fig. 18.

From Fig. 18 it becomes clear that the sizes of the nozzle window 36 and of the footer window 54 are chosen such that the nose 74 of the holding lever 66 can engage the same without having a direct contact with any of the nozzle window 36 and the footer window 54. This ensures that no frictional forces are generated between the nose 74, the nozzle window 36 and the footer window 54. In this way, wear on the parts used for locking the fuel assembly 22 to the nozzle 26 is reduced and the reliability of the fuel assembly fastening mechanism 24 is optimized.

The nose 74 further comprises a first sloping surface 100 and the footer window 54 comprises a second sloping surface 102 having the same slope as the first sloping surface 100. The first sloping surface 100 and the second sloping surface 102 further ensure that the tip of the nose 74 does not collide with the footer window 54 during rotation of the holding lever 66.

As can be seen in Fig. 18, immediately after the rotation of the holding lever 66, a first gap 104 between the upper side of the nose 74 and the nozzle window 36 is formed.

Upon releasing the force used to press the fuel assembly 22 and the securing wedge 56 downward, the fuel assembly 22 will start to float in the coolant and/or will be pushed upwards by the coolant flow and therefore will be slightly lifted from the flange 38 of the nozzle 26, such that a second gap 106 is formed between the flange 38 and the fuel assembly footer 30 and a contact surface 108 is formed between the upper side of the nose 74 and the nozzle window 36 and a locked state of the holding levers 66 is reached (see Fig. 19).

The pressure with which the fuel assembly 22 is pushed against the nozzle 26 downwards is released in a controlled manner such that no excessive forced can act on the nose 74 when the fuel assembly 22 is lifted from the flange 38 of the nozzle 26. An especially fine control of the pressure can be realized based on the measurements obtained by the pressure sensor.

In the locked state, the contact surface 108 is arranged perpendicular to the fuel assembly main axis 31, resulting in a static force between the nose 74 and the nozzle 26. Further, there is a static force acting between the second sloped surface 102 of the footer window 54 and the first sloped surface 100 of the nose 74.

Overall, no dynamic forces are acting on the components of the fuel assembly fastening mechanism 24 when the fuel assembly 22 is locked to the nozzle 26 and therefore to the bottom core plate 18 of the core barrel 12 of the nuclear reactor 10.

For extracting the fuel assembly 22, e.g. after the fuel contained in the fuel assembly 22 is used up or a desired amount of an isotope has been produced in the fuel assembly 22, the inserting process can essentially be reversed.

That is, the fuel assembly 22 can be pressed downwards to release the contact surface 108 and create the gap 104 again. Then, the operation handle 84 is moved from the lower rest section 92 to the upper rest section 88, thereby causing the securing wedge 56 to move from its lower position back to its upper position. During this movement, the first section 60 of the protruding portion 58 comes into contact with the first holding lever section 68 which is pressed into the inner footer grove 78, causing the holding lever 66 to rotate around the rotation pin 76 such that the nose 74 moves out from the footer windows 54 and from the nozzle windows 36 into the inner part of the fuel assembly footer 30. That is, the holding lever 66 rotates back to its unlocked state (see Fig. 12) such that the fuel assembly 22 can be lifted up and away from the nozzle 26.

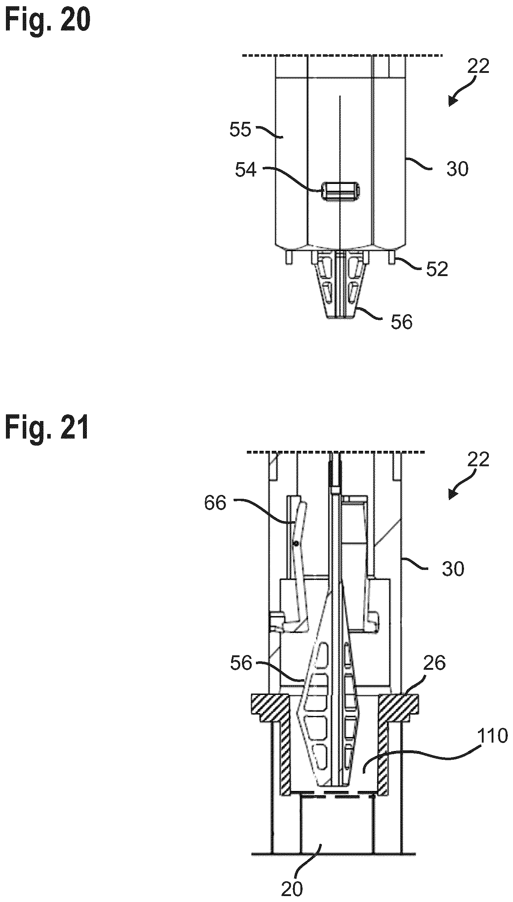

Figs. 20 and 21 depict the fuel assembly fastening mechanism 24 in another state of the securing wedge 56 which is a safety removal position. In the safety removal position, the securing wedge 56 is pressed further down compared to the lower position until the securing wedge 56 is at least partially held within a debris basket 110 of the nozzle 26.

In this position, the securing wedge 56, specifically the protrusions 64 of the protruding portions 58, are not anymore in contact with the holding levers 66. Preferably, the securing wedge 56 is not in contact with the holding levers 66 at all, as depicted in Fig. 21.

To reach the safety removal position, the operation handle 84 can be dismountable to be exchanged for a (not shown) extender rod which is connected to the connection rod 82, wherein the extender rod has a length which is suitable for pressing the securing wedge 56 down into the debris basket 110.

After the securing wedge 56 is moved into the debris basket 110, the holding levers 66 can still be in the locked position or in some intermediate position in which the noses 74 of the holding levers 66 are still within the nozzle windows 36. In Fig. 21, the part of the nozzle housing 34 which extends upwards from the flange 38 is not shown, though the respective part of the nozzle housing 34 will still engage the fuel assembly footer 30. Then, the whole fuel assembly fastening mechanism 24 can be removed from the core barrel 12 by unscrewing the nozzle 26 together with the still connected fuel assembly 22 and extracting the fuel assembly fastening mechanism 24 from the core barrel 12. Thus, the threaded connection between the nozzle 26 and the bottom core plate 18 further increases the safety when running the nuclear reactor 10 with the fuel assembly fastening mechanism 24, as defective fuel assemblies 22 can still be removed if the securing wedge 56 alone is not anymore capable of unlocking the holding levers 66.

Moving the securing wedge 56 into the safety removal position can be necessary when an excessive amount of precipitation and/or debris has collected within the fuel assembly footer 30, especially on the first lever section 68, thereby blocking the conventional operation of the fuel assembly fastening mechanism 24.

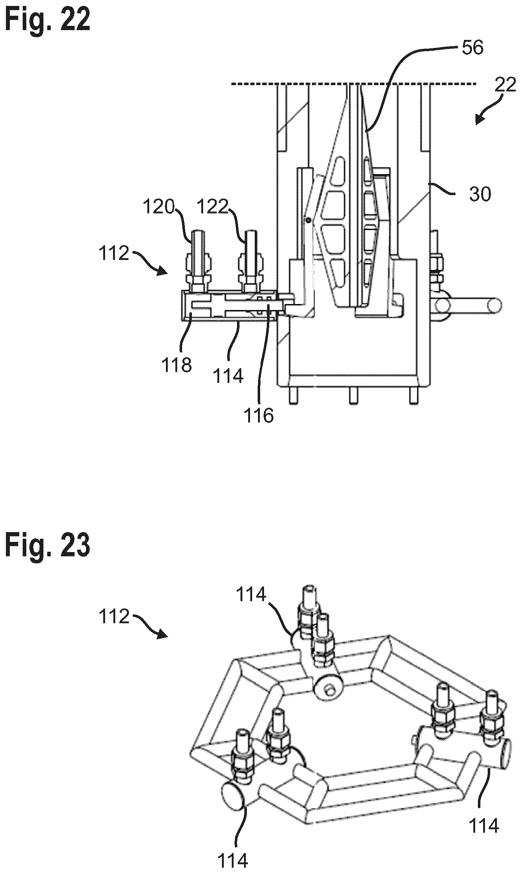

Fig. 22 shows a sectional view of the fuel assembly footer 30 together with one exemplary external device for pushing the noses 74 of the holding levers 66, wherein the external device is a safety unlocking device 112 comprising hydraulic pushing devices 114. In the shown embodiment, the safety unlocking device 112 comprises a total of three hydraulic pushing devices 114, arranged around the fuel assembly footer 30 in the mounting position of the fuel assembly 22 (see Fig. 23).

Each hydraulic pushing device 114 comprises an unlocking cylinder 116 which can be moved within an hydraulic chamber 118 of the hydraulic pushing device 114 between a first position and a second position, wherein in the second position a tip 120 of the unlocking cylinder 116 can be moved through the footer window 54 and the nozzle window 36 to push against the nose 74 of the holding lever 66 associated to the respective hydraulic pushing device 114.

Within the hydraulic chamber 118, a hydraulic medium is present which can be controlled by a first port 122 and a second port 124 of the hydraulic pushing device 114 connected to a (not shown) hydraulic control system.

The hydraulic medium is chosen to withstand the conditions in the core barrel 12 of the nuclear reactor. E.g., the hydraulic medium is a molten metal like lead or an high-boiling oil.

From Fig. 23 it becomes evident that the hydraulic chambers 118 of all of the hydraulic pushing devices 114 can be interconnected to ensure a synchronized operation of the unlocking cylinders 116.

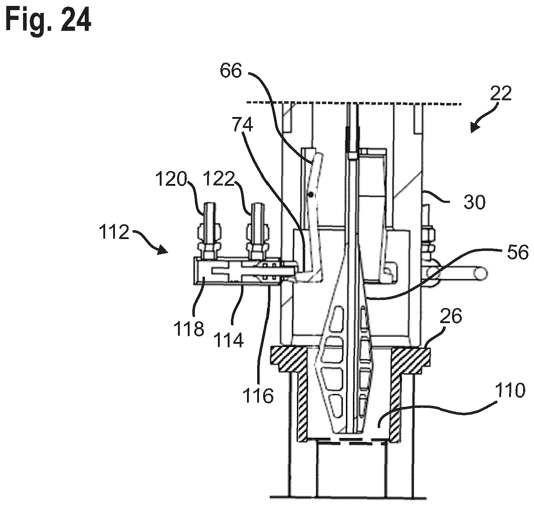

As shown in Fig. 24, the hydraulic pushing device 114 can be used to bring the holding levers 66 back to their unlocked state after the securing wedge 56 has been moved into the debris basket 110.

Even in cases, in which only minor amounts of precipitation or debris are collected within the fuel assembly footer 30, the hydraulic pushing device 114 can support the normal operation of the fuel assembly fastening mechanism 24. E.g., if in the situation like the one shown in Fig. 22 the securing wedge 56 is to be moved into the upper position, but the rotation of the holding lever 66 is blocked by precipitation or debris collected between the first lever section 68 and the footer groove 78, the nose 74 of the holding levers 66 can be pushed by the unlocking cylinder 116 in a synchronized manner with the upward movement of the securing wedge 56 such to loosen up the precipitation or debris to allow for the desired rotation of the holding levers 66.

In the shown embodiments, a configuration has been presented in which the unlocked position of the holding levers 66 is associated to the upper position of the securing wedge 56 and the locked position of the holding levers 66 is associated to the lower position of the securing wedge 56. Of course, it is also possible to reverse the arrangement of the holding levers 66, essentially turning them upside down compared to the embodiments as discussed above. In such a configuration, the unlocked position of the holding levers 66 is associated to the lower position of the securing wedge 56 and the locked position of the holding levers 66 is associated to the upper position of the securing wedge 56. Of course, the size and arrangement of the other parts of the fuel assembly fastening mechanism 24 need to be adapted accordingly in this case, e.g. the size of the nozzle housing 34, the position of the nozzle windows 36 within the nozzle housing 34, the position of the footer windows 54 and the footer grooves 78 within the fuel assembly footer 30, etc.

Overall, the fuel assembly fastening mechanism 24 provides for a reliable and secure system for mounting and removing fuel assemblies 22 into and from the core barrel 12 of the nuclear reactor 10. The mechanism for securing and releasing the fuel assemblies 22 relies on static loads, only, for fixing the participating components in place and avoids frictional forces to minimize wear.

## Claims

1. A fuel assembly fastening mechanism (24) for use in a nuclear reactor (10) comprising a core barrel (12) with a bottom core plate (18), the bottom core plate (18) having a lattice structure with a plurality of open cells (20), including
a fuel assembly (22) comprising
a fuel assembly header (28) and a fuel assembly footer (30) arranged at opposite ends of the fuel assembly (22) along a fuel assembly main axis,
the fuel assembly footer (30) having a footer housing (55) and comprising a holding lever (66) having a nose (74), the holding lever (66) being rotatable between an unlocked position and a locked position,
a securing wedge (56) arranged within the fuel assembly footer (30),
**characterised in that** the securing wedge (56) being movable between an upper position and a lower position,
wherein the holding lever (66) is in the unlocked position when the securing wedge (56) is in one position chosen from the upper position and the lower position of the securing wedge (56), and the holding lever (66) is in the locked position when the securing wedge (56) is in the other position chosen from the upper position and the lower position of the securing wedge (56),
a nozzle (26) for mounting the fuel assembly (22) in one of the open cells (20) of the bottom core plate (18), the nozzle (26) comprising
a nozzle housing (34) engaging the footer housing (55) along the fuel assembly main axis, the nozzle housing (34) comprising a nozzle window (36),
wherein the nose (74) of the holding lever (66) is received by the nozzle window (36) in the locked position of the holding lever (66) such that a contact surface (108) between the nose (74) of the holding lever (66) and the nozzle window (36) is arranged perpendicular to the fuel assembly main axis.

2. The fuel assembly fastening mechanism (24) of claim 1, wherein the holding lever (66) comprises an opening (75) in which a rotation pin (76) is inserted, the rotation pin (76) defining a rotation axis of the holding lever (66).

3. The fuel assembly fastening mechanism (24) of claim 1 or 2, wherein the footer housing (55) has a footer window (54) associated to the holding lever (66), the footer window (54) being aligned with the nozzle window (36), and wherein the nose (74) of the holding lever (66) is received by the nozzle window (36) and by the footer window (54) in the locked position of the holding lever (66).

4. The fuel assembly fastening mechanism (24) of claim 3, wherein the nose (74) of the holding lever (66) has a first sloping surface (100) and the footer window (54) has a second sloping (102) surface being in contact with the first sloping surface (100) in the locked position of the holding lever (66).

5. The fuel assembly fastening mechanism (24) of any of the preceding claims, wherein the fuel assembly footer (30) comprises more than one holding lever (66) and the nozzle housing (34) comprises more than one nozzle window (36), wherein each of the holding levers (66) is associated to one of the nozzle windows (36).

6. The fuel assembly fastening mechanism (24) of any of the preceding claims, wherein the fuel assembly header (28) comprises an operation handle (84) and the fuel assembly (22) comprises a connection rod (82) connecting the operation handle (84) with the securing wedge (56).

7. The fuel assembly fastening mechanism (24) of claim 6, wherein the operation handle (84) engages a groove (86) of the fuel assembly header (28), the groove (86) extending from an upper rest section (88) to a lower rest section (92), the operating handle (84) being movable from the upper rest section (88) to the lower rest section (92).

8. The fuel assembly fastening mechanism (24) of any of the preceding claims, wherein the securing wedge (56) comprises a protruding portion (58) contacting the holding lever (66).

9. The fuel assembly fastening mechanism (24) of any of the preceding claims, wherein the nozzle housing (34) engages a footer groove (78) in the footer housing (55).

10. The fuel assembly fastening mechanism (24) of any of the preceding claims, wherein the fuel assembly footer (30) comprises an alignment pin (52) which is received by an alignment opening (50) of the nozzle (26).

11. The fuel assembly fastening mechanism (24) of any of the preceding claims, wherein the nozzle (26) has a thread (40) for connecting the nozzle (26) with the open cell (20) of the bottom core plate (18).

12. The fuel assembly fastening mechanism (24) of any of the preceding claims, wherein the nozzle (26) has a meshed orifice (44) at a lower end (42) of the nozzle (26).

13. The fuel assembly fastening mechanism (24) of any of the preceding claims, wherein the securing wedge (56) is movable to a safety removal position, and wherein the securing wedge (56) is arranged within a debris basket (110) of the nozzle (26) in the safety removal position.

14. The fuel assembly fastening mechanism (24) of any of the preceding claims, wherein the fuel fastening assembly (24) further comprises a safety unlocking device (112) comprising an unlocking cylinder (116) being movable from a first position to a second position, wherein the unlocking cylinder (116) is configured to push against the nose (74) of the holding lever (66) in the second position.

15. A method of operating a fuel assembly fastening mechanism (24) according to any of the preceding claims, the method comprising the following steps:
- Mounting the nozzle (26) in one of the open cells (20) of the bottom core plate (18);
- Inserting the fuel assembly (22) in the core barrel (12), while the holding lever (66) is in its unlocked position, by lowering the fuel assembly (22) onto the nozzle (26) such that the nozzle housing (34) engages the footer housing;
- Moving the securing wedge (56) from its upper position to its lower position or from its lower position to its upper position, thereby rotating the holding lever (66) to its locked position.

16. A fuel assembly (22) for a fuel assembly fastening mechanism (24) according to any of the preceding claims 1 to 14, the fuel assembly (22) comprising
a fuel assembly header (28) and a fuel assembly footer (30) arranged at opposite ends of the fuel assembly (22) along a fuel assembly main axis,
the fuel assembly footer (30) having a footer housing (55) and comprising a holding lever (66) with a nose (74), the holding lever (66) being rotatable between an unlocked position and a locked position,
a securing wedge (56) arranged within the fuel assembly footer (30), the securing wedge (56) being movable between an upper position and a lower position,
wherein the holding lever (66) is in the unlocked position when the securing wedge (56) is in one position chosen from the upper position and the lower position of the securing wedge (56), and the holding lever (66) is in the locked position when the securing wedge (56) is in the other position chosen from the upper position and the lower position of the securing wedge (56).

## Patentansprüche

1. Brennelementbefestigungsmechanismus (24) zur Verwendung in einem Kernreaktor (10), der ein Kernrohr (12) mit einer unteren Kernplatte (18) umfasst, wobei die untere Kernplatte (18) einen Gitteraufbau mit mehreren offenen Zellen (20) aufweist, mit
einem Brennelement (22) mit
einem Brennelementkopf (28) und einem Brennelementfuß (30), die längs einer Brennelementhauptachse an entgegengesetzten Enden des Brennelements (22) angeordnet sind,
wobei der Brennelementfuß (30) ein Fußgehäuse (55) aufweist und einen Haltehebel (66) mit einem Vorsprung (74) umfasst, wobei der Haltehebel (66) zwischen einer Entriegelungsstellung und einer Verriegelungsstellung drehbar ist,
einem Sicherungskeil (56), der innerhalb des Brennelementfußes (30) angeordnet ist,
**dadurch gekennzeichnet, dass** der Sicherungskeil (56) zwischen einer oberen Stellung und einer unteren Stellung bewegbar ist,
wobei sich der Haltehebel (66) in der Entriegelungsstellung befindet, wenn sich der Sicherungskeil (56) in einer Position befindet, die aus der oberen Stellung und der unteren Stellung des Sicherungskeils (56) ausgewählt ist, und sich der Haltehebel (66) in der Verriegelungsstellung befindet, wenn sich der Sicherungskeil (56) in der anderen Stellung befindet, die aus der oberen Stellung und der unteren Stellung des Sicherungskeils (56) ausgewählt ist,
einem Stutzen (26) zur Anbringung des Brennelements (22) in einer der offenen Zellen (20) der unteren Kernplatte (18), wobei der Stutzen (26)
ein Stutzengehäuse (34) umfasst, das längs der Brennelementhauptachse mit dem Fußgehäuse (55) in Eingriff steht, wobei das Stutzengehäuse (34) ein Stutzenfenster (36) aufweist,
wobei der Vorsprung (74) des Haltehebels (66) in der Verriegelungsstellung des Haltehebels (66) so von dem Stutzenfenster (36) aufgenommen ist, dass eine Anlagefläche (108) zwischen dem Vorsprung (74) des Haltehebels (66) und dem Stutzenfenster (36) senkrecht zu der Brennelementhauptachse angeordnet ist.

2. Brennelementbefestigungsmechanismus (24) nach Anspruch 1, bei dem der Haltehebel (66) eine Öffnung (75) aufweist, in die ein Drehstift (76) eingesetzt ist, wobei der Drehstift (76) eine Drehachse des Haltehebels (66) definiert.

3. Brennelementbefestigungsmechanismus (24) nach Anspruch 1 oder 2, bei dem das Fußgehäuse (55) ein dem Haltehebel (66) zugeordnetes Fußfenster (54) aufweist, wobei das Fußfenster (54) auf das Stutzenfenster (36) ausgerichtet ist und wobei der Vorsprung (74) des Haltehebels (66) in der Verriegelungsstellung des Haltehebels (66) vom Stutzenfenster (36) und vom Fußfenster (54) aufgenommen ist.

4. Brennelementbefestigungsmechanismus (24) nach Anspruch 3, bei dem der Vorsprung (74) des Haltehebels (66) eine erste geneigte Fläche (100) aufweist und das Fußfenster (54) eine zweite geneigte Fläche (102) aufweist, die in der Verriegelungsstellung des Haltehebels (66) mit der ersten geneigten Fläche (100) in Anlage ist.

5. Brennelementbefestigungsmechanismus (24) nach einem der vorhergehenden Ansprüche, bei dem der Brennelementfuß (30) mehr als einen Haltehebel (66) umfasst und das Stutzengehäuse (34) mehr als ein Stutzenfenster (36) umfasst, wobei jeder der Haltehebel (66) einem der Stutzenfenster (36) zugeordnet ist.

6. Brennelementbefestigungsmechanismus (24) nach einem der vorhergehenden Ansprüche, bei dem der Brennelementkopf (28) einen Betätigungsgriff (84) umfasst und das Brennelement (22) eine Verbindungsstange (82) umfasst, die den Betätigungsgriff (84) mit dem Sicherungskeil (56) verbindet.

7. Brennelementbefestigungsmechanismus (24) nach Anspruch 6, bei dem der Betätigungsgriff (84) in eine Nut (86) des Brennelementkopfes (28) eingreift, wobei sich die Nut (86) von einem oberen Auflageabschnitt (88) zu einem unteren Auflageabschnitt (92) erstreckt, wobei der Betätigungsgriff (84) vom oberen Auflageabschnitt (88) zum unteren Auflageabschnitt (92) bewegbar ist.

8. Brennelementbefestigungsmechanismus (24) nach einem der vorhergehenden Ansprüche, bei dem der Sicherungskeil (56) einen vorstehenden Teil (58) umfasst, der mit dem Haltehebel (66) in Anlage ist.

9. Brennelementbefestigungsmechanismus (24) nach einem der vorhergehenden Ansprüche, bei dem das Stutzengehäuse (34) in eine Fußnut (78) im Fußgehäuse (55) eingreift.

10. Brennelementbefestigungsmechanismus (24) nach einem der vorhergehenden Ansprüche, bei dem der Brennelementfuß (30) einen Ausrichtstift (52) aufweist, der von einer Ausrichtöffnung (50) des Stutzens (26) aufgenommen ist.

11. Brennelementbefestigungsmechanismus (24) nach einem der vorhergehenden Ansprüche, bei dem der Stutzen (26) ein Gewinde (40) zur Verbindung des Stutzens (26) mit der offenen Zelle (20) der unteren Kernplatte (18) aufweist.

12. Brennelementbefestigungsmechanismus (24) nach einem der vorhergehenden Ansprüche, bei dem der Stutzen (26) an einem unteren Ende (42) des Stutzens (26) eine mit einem Netz versehene Öffnung (44) aufweist.

13. Brennelementbefestigungsmechanismus (24) nach einem der vorhergehenden Ansprüche, bei dem der Sicherungskeil (56) in eine Sicherheitsentnahmeposition bewegbar ist und bei dem der Sicherungskeil (56) in der Sicherheitsentnahmeposition in einem Schmutzfangkorb (110) des Stutzens (26) angeordnet ist.

14. Brennelementbefestigungsmechanismus (24) nach einem der vorhergehenden Ansprüche, bei dem die Brennelementbefestigung (24) ferner eine Sicherheitsentriegelungsvorrichtung (112) umfasst, die einen Entriegelungszylinder (116) umfasst, der aus einer ersten Stellung in eine zweite Stellung bewegbar ist, wobei der Entriegelungszylinder (116) so eingerichtet ist, dass er in der zweiten Stellung gegen den Vorsprung (74) des Haltehebels (66) drückt.

15. Verfahren zur Betätigung eines Brennelementbefestigungsmechanismus (24) nach einem der vorhergehenden Ansprüche, wobei das Verfahren die folgenden Schritte umfasst:
- Anbringen des Stutzens (26) in einer der offenen Zellen (20) der unteren Kernplatte (18),
- Einsetzen des Brennelements (22) in das Kernrohr (12), während sich der Haltehebel (66) in seiner Entriegelungsstellung befindet, indem das Brennelement (22) so auf den Stutzen (26) abgesenkt wird, dass das Stutzengehäuse (34) mit dem Fußgehäuse in Eingriff gelangt,
- Bewegen des Sicherungskeils (56) aus seiner oberen Stellung in seine untere Stellung oder aus seiner unteren Stellung in seine obere Stellung, wodurch der Haltehebel (66) in seine Verriegelungsstellung gedreht wird.

16. Brennelement (22) für einen Brennelementbefestigungsmechanismus (24) nach einem der vorhergehenden Ansprüche 1 bis 14, wobei das Brennelement (22) Folgendes umfasst:
einen Brennelementkopf (28) und einen Brennelementfuß (30), die längs einer Brennelementhauptachse an entgegengesetzten Enden des Brennelements (22) angeordnet sind,
wobei der Brennelementfuß (30) ein Fußgehäuse (55) aufweist und einen Haltehebel (66) mit einem Vorsprung (74) umfasst, wobei der Haltehebel (66) zwischen einer Entriegelungsstellung und einer Verriegelungsstellung drehbar ist,
einen Sicherungskeil (56), der innerhalb des Brennelementfußes (30) angeordnet ist, wobei der Sicherungskeil (56) zwischen einer oberen Stellung und einer unteren Stellung bewegbar ist,
wobei sich der Haltehebel (66) in der Entriegelungsstellung befindet, wenn sich der Sicherungskeil (56) in einer Stellung befindet, die aus der oberen Stellung und der unteren Stellung des Sicherungskeils (56) ausgewählt ist, und sich der Haltehebel (66) in der Verriegelungsstellung befindet, wenn sich der Sicherungskeil (56) in der anderen Stellung befindet, die aus der oberen Stellung und der unteren Stellung des Sicherungskeils (56) ausgewählt ist.

## Revendications

1. Mécanisme de fixation (24) d'un assemblage combustible pour l'utilisation dans un réacteur nucléaire (10) comprenant un tube central (12) présentant une plaque centrale inférieure (18), la plaque centrale inférieure (18) comprenant une structure en treillis qui présente une pluralité de cellules ouvertes (20), comprenant
un assemblage combustible (22) comprenant
une tête d'assemblage combustible (28) et un pied d'assemblage combustible (30) agencés à des extrémités opposées de l'assemblage combustible (22) le long d'un axe principal de l'assemblage combustible,
le pied d'assemblage combustible (30) présentant un boîtier de pied (55) et comprenant un levier de retenue (66) présentant un nez (74), le levier de retenue (66) étant rotatif entre une position déverrouillée et une position verrouillée,
une cale de fixation (56) agencée à l'intérieur du pied d'assemblage combustible (30),
**caractérisé en ce que** la cale de fixation (56) est mobile entre une position supérieure et une position inférieure,
le levier de retenue (66) se trouvant dans la position déverrouillée lorsque la cale de fixation (56) se trouve dans l'une des positions choisie parmi la position supérieure et la position inférieure de la cale de fixation (56), et le levier de retenue (66) se trouvant dans la position verrouillée lorsque la cale de fixation (56) se trouve dans l'autre position choisie parmi la position supérieure et la position inférieure de la cale de fixation (56),
un embout (26) pour le montage de l'assemblage combustible (22) dans l'une des cellules ouvertes (20) de la plaque centrale inférieure (18), l'embout (26) comprenant
un boîtier d'embout (34) s'engageant dans le boîtier de pied (55) le long de l'axe principal de l'assemblage combustible, le boîtier d'embout (34) comprenant une fenêtre d'embout (36),
le nez (74) du levier de retenue (66) étant reçu par la fenêtre d'embout (36) dans la position verrouillée du levier de retenue (66) de sorte qu'une surface de contact (108) entre le nez (74) du levier de retenue (66) et la fenêtre d'embout (36) est agencée perpendiculairement à l'axe principal de l'assemblage combustible.

2. Mécanisme de fixation (24) d'assemblage combustible selon la revendication 1, le levier de retenue (66) comprenant une ouverture (75) dans laquelle est insérée une goupille de rotation (76), la goupille de rotation (76) définissant un axe de rotation du levier de retenue (66).

3. Mécanisme de fixation (24) d'assemblage combustible selon la revendication 1 ou 2, le boîtier de pied (55) présentant une fenêtre de pied (54) associée au levier de retenue (66), la fenêtre de pied (54) étant alignée avec la fenêtre d'embout (36), et le nez (74) du levier de retenue (66) étant reçu par la fenêtre d'embout (36) et par la fenêtre de pied (54) dans la position verrouillée du levier de retenue (66).

4. Mécanisme de fixation (24) d'assemblage combustible selon la revendication 3, le nez (74) du levier de retenue (66) présentant une première surface inclinée (100), et la fenêtre de pied (54) présentant une deuxième surface inclinée (102) en contact avec la première surface inclinée (100) dans la position verrouillée du levier de retenue (66).

5. Mécanisme de fixation (24) d'assemblage combustible selon l'une des revendications précédentes, le pied d'assemblage combustible (30) comprenant plus d'un levier de retenue (66), et le boîtier d'embout (34) comprenant plus d'une fenêtre d'embout (36), chacun des leviers de retenue (66) étant associé à l'une des fenêtres d'embout (36).

6. Mécanisme de fixation (24) d'assemblage combustible selon l'une des revendications précédentes, la tête d'assemblage combustible (28) comprenant une poignée de manœuvre (84), et l'assemblage combustible (22) comprenant une tige de liaison (82) reliant la poignée de manœuvre (84) à la cale de fixation (56).

7. Mécanisme de fixation (24) d'assemblage combustible selon la revendication 6, la poignée de manœuvre (84) s'engageant dans une rainure (86) de la tête d'assemblage combustible (28), la rainure (86) s'étendant d'un tronçon d'appui supérieur (88) à un tronçon d'appui inférieur (92), la poignée de manœuvre (84) étant mobile du tronçon d'appui supérieur (88) au tronçon d'appui inférieur (92).

8. Mécanisme de fixation (24) d'assemblage combustible selon l'une des revendications précédentes, la cale de fixation (56) comprenant une partie en saillie (58) en contact avec le levier de retenue (66).

9. Mécanisme de fixation (24) d'assemblage combustible selon l'une des revendications précédentes, le boîtier d'embout (34) s'engageant dans une rainure de pied (78) du boîtier de pied (55).

10. Mécanisme de fixation (24) d'assemblage combustible selon l'une des revendications précédentes, le pied d'assemblage combustible (30) comprenant une goupille d'alignement (52) reçue par une ouverture d'alignement (50) de l'embout (26).

11. Mécanisme de fixation (24) d'assemblage combustible selon l'une des revendications précédentes, l'embout (26) présentant un filetage (40) pour le raccordement de l'embout (26) à la cellule ouverte (20) de la plaque centrale inférieure (18).

12. Mécanisme de fixation (24) d'assemblage combustible selon l'une des revendications précédentes, l'embout (26) présentant un orifice maillé (44) à une extrémité inférieure (42) de l'embout (26).

13. Mécanisme de fixation (24) d'assemblage combustible selon l'une des revendications précédentes, la cale de fixation (56) étant mobile vers une position de retrait de sécurité, et la cale de fixation (56) étant agencée à l'intérieur d'un panier à débris (110) de l'embout (26) dans la position de retrait de sécurité.

14. Mécanisme de fixation (24) d'assemblage combustible selon l'une des revendications précédentes, l'ensemble de fixation de combustible (24) comprenant en outre un dispositif de déverrouillage de sécurité (112) qui présente un cylindre de déverrouillage (116) mobile d'une première position à une deuxième position, le cylindre de déverrouillage (116) étant réalisé de manière à pousser contre le nez (74) du levier de retenue (66) dans la deuxième position.

15. Procédé de mise en œuvre d'un mécanisme de fixation (24) d'assemblage combustible selon l'une des revendications précédentes, le procédé comprenant les étapes suivantes :
- le montage de l'embout (26) dans l'une des cellules ouvertes (20) de la plaque centrale inférieure (18),
- l'insertion de l'assemblage combustible (22) dans le tube central (12) alors que le levier de retenue (66) est dans sa position déverrouillée, en abaissant l'assemblage combustible (22) sur l'embout (26) de sorte que le boîtier d'embout (34) s'engage dans le boîtier de pied,
- le déplacement de la cale de fixation (56) de sa position supérieure vers sa position inférieure ou de sa position inférieure vers sa position supérieure, mettant ainsi le levier de retenue (66) en rotation vers sa position verrouillée.

16. Assemblage combustible (22) pour un mécanisme de fixation (24) d'assemblage combustible selon l'une des revendications précédentes 1 à 14, l'assemblage combustible (22) comprenant
une tête d'assemblage combustible (28) et un pied d'assemblage combustible (30) agencés à des extrémités opposées de l'assemblage combustible (22) le long d'un axe principal de l'assemblage combustible,
le pied d'assemblage combustible (30) présentant un boîtier de pied (55) et comprenant un levier de retenue (66) présentant un nez (74), le levier de retenue (66) étant rotatif entre une position déverrouillée et une position verrouillée,
une cale de fixation (56) agencée à l'intérieur du pied d'assemblage combustible (30), la cale de fixation (56) étant mobile entre une position supérieure et une position inférieure,
le levier de retenue (66) se trouvant dans la position déverrouillée lorsque la cale de fixation (56) se trouve dans l'une des positions choisie parmi la position supérieure et la position inférieure de la cale de fixation (56), et le levier de retenue (66) se trouvant dans la position verrouillée lorsque la cale de fixation (56) se trouve dans l'autre position choisie parmi la position supérieure et la position inférieure de la cale de fixation (56).
